Europäisches Patentamt

European Patent Office

Office européen des brevets

(19)

(11) Publication number: **0 261 908 B1**

(12) EUROPEAN PATENT SPECIFICATION

(45) Date of publication of patent specification: **13.11.91** (51) Int. Cl.⁵: **A01C 1/08**, B05C 5/02

(21) Application number: **87308326.5**

(22) Date of filing: **21.09.87**

(54) Method of and apparatus for applying a fluid to a bulk commidity. .

(30) Priority: **22.09.86 AU 8142/86**

(43) Date of publication of application:
**30.03.88 Bulletin 88/13**

(45) Publication of the grant of the patent:
**13.11.91 Bulletin 91/46**

(84) Designated Contracting States:
**AT BE CH DE ES FR GB GR IT LI LU NL SE**

(56) References cited:
**EP-A- 0 041 033
DE-C- 261 896
FR-A- 2 204 982
US-A- 3 138 482**

**SOVIET INVENTIONS ILLUSTRATED, SEC-
TION P/Q, week 84/16, 30th May 1984, ab-
stract no. 84-100239, Derwent Publications
Ltd, London, GB; & SU-A-1 029 853 (PLANTS
PROTEC. RES.) 23-07-1983**

(73) Proprietor: **WELLCOME AUSTRALIA LIMITED**
**53 Phillips Street**
**Cabarita New South Wales 2137(AU)**

(72) Inventor: **Ardley, John Henry**
**WELLCOME AUSTRALIA LIMITED 53 Phillips
Street**
**Cabarita New South Wales 2137(AU)**
Inventor: **Smith, Brett Allen**
**WELLCOME AUSTRALIA LIMITED 53 Phillips
Street**
**Cabarita New South Wales 2137(AU)**
Inventor: **Nicholls, Alison Wynne**
**WELLCOME AUSTRALIA LIMITED 53 Phillips
Street**
**Cabarita New South Wales 2137(AU)**

(74) Representative: **Rollins, Anthony John**
**Group Patents & Agreements The Wellcome
Foundation Ltd Langley Court
Beckenham Kent BR3 3BS(GB)**

## Description

This invention relates to a method of and apparatus for applying a fluid to a bulk commodity on a conveyor. The invention has particular use in the application of insecticides, pesticides and fungicides or the like to grain whilst it is being conveyed on a travelling conveyor to a silo, and the invention is hereinafter described in the context of such an application. However, it will be understood that the invention does have broader application, in the context of applying any required fluid medium to any bulk material which is carried by any type of conveyor.

Grain products such as wheat, barley, oats, sorghum, maize and oil seeds are usually treated prior to storage with a protectant solution. Diluted protectant concentrates are sprayed onto the product whilst it is being conveyed into storage, the solution being directed onto the product from a spray head which is located above the conveyor. The solution is pressurised and delivered to the spray head by a pump, and a solenoid actuated valve is provided for admitting the solution to the spray head when grain is sensed to be present on the conveyor. Sensing of the grain is effected by a hinged flap which is located in the conveyor path, the flap being caused to hinge upwardly when grain is present on the conveyor and the upward movement of the flap being used to cause actuation of the solenoid valve. The spray head is usually located upstream of the hinged flap and, thus, a small volume of grain passes the spray head before it is sensed to be present on the conveyor. An example of this type of device is disclosed in US-A-3138482 wich discloses the preambles of claims 1 and 9.

A number of problems arise from the use of the existing system. Firstly, even though low-toxic grain protectants may be used, there is a concern for the occupational health and safety of persons who are exposed to aerosol particles from the spray solutions in an enclosed work environment. Secondly, operator errors can occur when diluting chemicals with water. Thirdly, copious amounts of water are required for dilution. Fourthly, as in the case of most spray systems, the fine liquid droplets tend to be dispersed and it has been found that chemical losses of up to thirty per cent can be experienced. Quite apart from the increased operating costs that flow from these losses, the dispersion of spray may lead to inadequate dosing or, if overcompensation occurs, to excessive dosing of grain. Also, corrosion of plant and machinery may occur as a result of chemical dispersion into a closed environment.

The present invention seeks to overcome or diminish these problems by providing an arrangement in which a required fluid is supplied directly to a bulk commodity which is to be exposed to the fluid.

Thus, the invention provides an apparatus for applying a fluid to a material which is carried by a conveyor, the apparatus comprising a flap device located adjacent the conveyor and positioned to contact material carried by or discharged from the conveyor. A distributor extends across at least a portion of the width of the flap device and is arranged to direct fluid into the material which is contacted by the flap device, and means are provided for delivering the fluid to the distributor. Also, means are provided for sensing the existence of material on the conveyor and for admitting the fluid to the distributor responsive to the sensing of material on the conveyor.

In contrast with the known prior art, the present invention is directed to an apparatus which functions to apply the fluid directly to the material on the conveyor. The fluid is delivered by way of the flap device, which is maintained in contact with the material, and, thus, the fluid cannot be dispersed other than into the material. The fluid would normally comprise a liquid but it may comprise other flowable materials such as powder, gas or vapour. Also, because the fluid is applied directly to the material and is not dipersed into the surrounding atmosphere, it may be admitted to the material in a concentrated form.

The invention may also be defined in terms of a method of applying a fluid to a bulk material which is carried by a conveyor and wherein the fluid is directed into the material by way of a distributor on a flap device. The flap device is located adjacent the conveyor and is positioned such that it contacts the material carried by or delivered from the conveyor. The fluid is delivered to the distributor responsive to the material being sensed to be present on the conveyor.

The flap device preferably is located above the conveyor and is positioned to overlie the conveyor. Thus, the material will then contact the underside of the flap device, causing the flap device to adjust to the height of the material. However, in an alternative arrangement, the flap device may be located at the discharge end of the conveyor and be located below the material when it is discharged from the conveyor. In this case the flap device will be biased upwardly against the underside of the material stream and the fluid will be directed into the material as it passes over the flap device.

The flap device preferably comprises or includes a sheet of flexible material, such as a synthetic rubber, and it preferably is pivotally mounted at one end to a supporting structure. Furthermore, the flap device itself is preferably used as the means for sensing the presence of material on the conveyor. Thus, as the flap device is caused to rise and move over material which is on the conveyor, its pivotal movement may be used to actuate an electric or pneumatic control device. Also, the quantity of material on the conveyor may be determined by measuring the degree of pivotal movement that is imparted to the flap device as it rides over the material.

The distributor may be mounted to the flap device or be moulded into the device as a component part. The distributor preferably extends across a major portion of the width of the flap device and in a direction transverse to the direction of movement of the conveyor.

The flow of fluid to the distributor may be controlled by a valve, (for example, a solenoid actuated valve) or by switching a pump as and when required.

Metering of the fluid to the apparatus is preferably controlled by a microprocessor or other controller which provides a pump controlling output signal which is determined by a number of input variables. The input variables will include some or all of the following:

1. The velocity of the conveyor.

2. The quantity of material carried by the conveyor, measured in terms of the depth of material on the conveyor.

3. The required dose rate for the material in terms of, for example, litres of fluid per tonne of material.

4. The flow volume or rate of fluid delivered to the distributor.

5. The back pressure of fluid in the pump circuit.

6. The electrical load demand of the conveyor or an elevator which is fed by the conveyor.

The invention will be more fully understood from the following description of a preferred embodiment of an apparatus which may be employed for applying a liquid grain protectant to a grain which is conveyed to a storage site such as a bunker or a silo. The invention is described with reference to the accompanying drawings in which:

Figure 1 shows a diagramatic representation of a portion of a conveyor belt and the liquid application apparatus located above the conveyor,

Figure 2 shows an end elevation view of a portion of the arrangement shown in Figure 1, the view being taken in the direction of section plane 2-2 as shown in Figure 1,

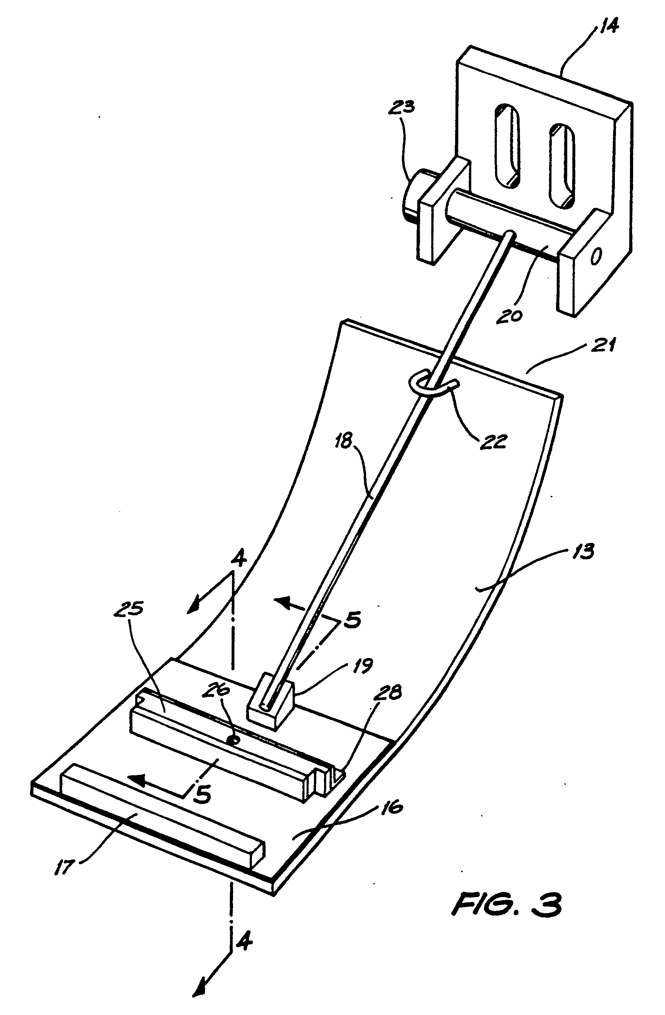

Figure 3 shows a perspective view on an enlarged scale of a flap device which is incorporated in the apparatus of Figure 1, the flap device including a distributor mounted thereto,

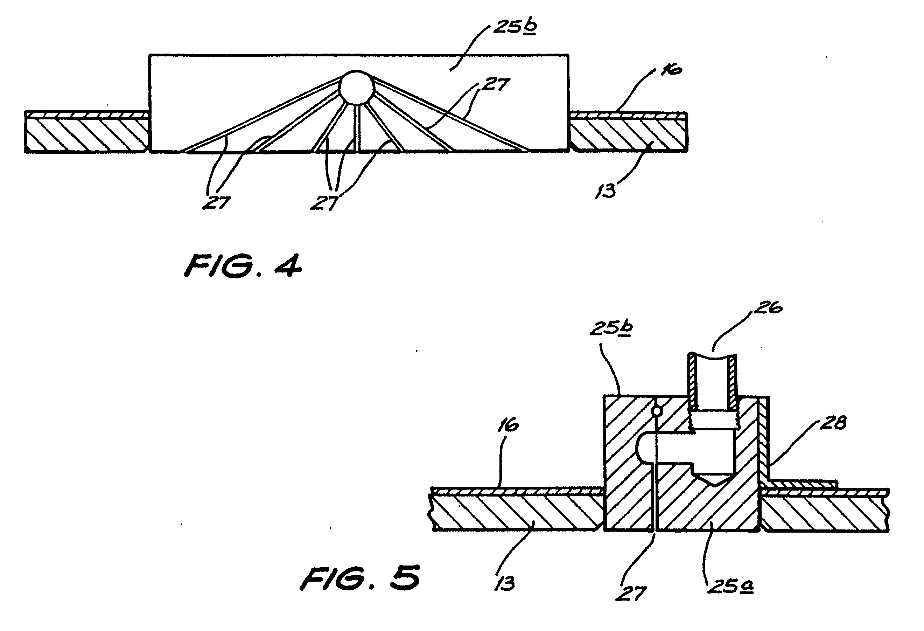

Figure 4 shows a sectional elevation view of the distributor as seen in the direction of section plane 4-4 in Figure 3,

Figure 5 shows a further sectional elevation view of the distributor, as seen in the direction of section plane 5-5 in Figure 4, and

Figure 6 shows a schematic diagram of fluid circuit components of the apparatus.

As illustrated, the apparatus includes a grain conveyor 10 of a type which is suitable for transporting grain 11 from a freight car to a silo bucket elevator. The conveyor 10 is carried by support rollers 12 and by a frame structure (not shown) which carries the rollers.

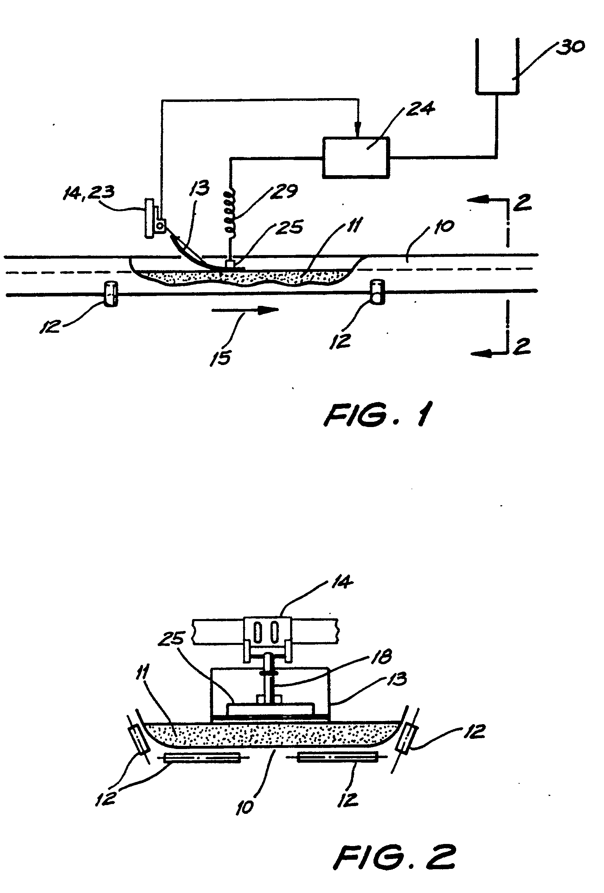

The apparatus which is employed for applying the protectant solution to the grain is mounted above the conveyor and comprises a flap device 13 which extends downwardly from a mounting structure 14. The flap device 13 projects forwardly of the structure 14 in the direction of movement of the conveyor, the conveyor movement direction being indicated by the arrow 15 in Figure 1.

The flap device 13 is formed from a flexible resilient sheet material such as a synthetic rubber or polyurethane and it has a width less than that of the conveyor 10. Typically the width of the flap device 13 will be equal to one third of the width of the conveyor.

The upper surface of the flap device 13 is clad at one end with a sheet of metal 16, such as stainless steel or aluminium, which serves to maintain that end of the flap device in a flat condition. A metal weight in the form of a steel bar 17 is secured to the free end of the flap device and serves to hold the device against the surface of the grain during passage of the conveyor.

A metal rod 18 is connected to the sheet 16 by way of a mounting block 19, and the rod 18 is connected to a rotatable shaft 20 which is carried by the mounting structure 14. The rod 18 is connected to the upper end 21 of the flap device 13 by way of a U-bolt 22, which facilitates relative movement between the rod and the upper end of the flap device. Thus, the complete flap device is pivotable about the axis of rotation of the shaft 20.

As indicated in Figure 1, an electrical control device (e.g. a potentiometer) 23 is associated with the mounting structure 14, and when the flap device pivots upwardly to a predetermined extent, the control device 23 is acutated to initiate operation of a pump 24.

The flap device 13 extends downwardly from the mounting structure 14 and, in the absence of any grain on the conveyor, the flap device assumes a lower pivotal position. Although not shown in the drawings, a helical tension spring may be used to support the lower end of the flap such that it is held a few millimetres above the level of the conveyor when no material is actually being carried by the conveyor. The spring serves to protect the underside of the flap device and the conveyor from excessive wear when the conveyor is running and no material is carried by the conveyor.

When grain is present on the conveyor, the flap device pivots upwardly to overlay the upper surface of the grain. In pivoting upwardly, the flap device 13 functions to sense the presence of grain on the conveyor and initiates actuation of the pump 24.

A distributor 25 is mounted to the flap device 13 and extends across the device in the direction transverse to the direction of travel of the conveyor. The distributor 25 comprises a two-part metal bar-like structure 25a, b and it includes a central inlet port 26 and a series of downwardly extending distributor channels 27. The distributor 25 is recessed into the flap device 13, such that the distributor channels open to the underside of the flap device. Thus, the bottom of distributor 25 lies flush with the underside of the flap device 13 and fluid which is forced through the distributor channels 27 is actually wiped onto the surface of the grain that is contacted by the flap device. An L-shaped mounting bracket 28 is employed for mounting the distributor to the flap device.

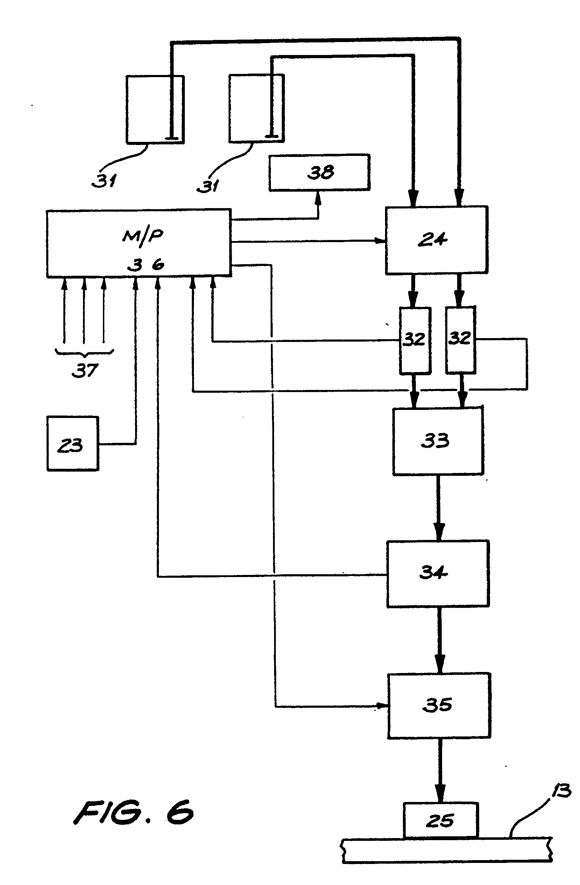

A liquid delivery line 29 connects with the inlet port 26 and serves to provide the distributor 25 with liquid from a reservoir 30 (as indicated in Figure 1) or from a plurality of drums 31 (as indicated in Figure 6).

In the circuit as shown in Figure 6, two different concentrate liquids, for example two insecticides which provide for broad spectrum protection, are drawn from the two drums 31 by the perastaltic pump 24. The desired mix ratio of the two liquids is determined by the relative ratio of occluded volumes of the tubes that are used to carry the liquids to and through the pump 24.

The two liquids are directed through respective flowmeters 32, into a mixing chamber 33, and thereafter through a pressure transducer 34. The pressure transducer serves to detect for excessive back pressure within the circuit and, thus, to sense the presence of any blockage in the line 29.

After passing through the pressure transducer 34, the blended liquids flow through a solenoid actuated valve 39 and then to the distributor 25. The solenoid valve is energised to preclude residual fluid flow when grain is sensed to be not present on the conveyor.

Control of the pump 24 is effected by a microprocessor 36, with inputs to the microprocessor being derived from the control device 23, the flowmeters 32 and the pressure transducer 34. Other inputs 37, which are not specifically indicated in Figure 6, are fed to the microprocessor to provide a measure of the conveyor velocity, the load on the conveyor and the insecticide dosing requirements for the grain.

An alarm device 38 may also be incorporated in the circuit to provide for visual and/or audible indication of blockages or other malfunctions in the system.

## Claims

1. An apparatus for applying a fluid to a material which is carried by a conveyor (10), the apparatus comprising a flap device (13) located adjacent the conveyor and positioned to contact material (11) carried by or discharged from the conveyor; a distributor (25) arranged to direct fluid into the material (11) which is contacted by the flap device (13) when the apparatus is in use, means (29) are provided for delivering the fluid to the distributor (25), means (23) are provided for sensing the existence of material on the conveyor (10) and for admitting the fluid to the distributor (25) responsive to material being sensed to be present on the conveyor characterised in that the distributor (25) is mounted on the flap device (13) and extends across at least a portion of the width of the flap device (13).

2. The apparatus as claimed in Claim 1 further characterised in that the flap device (13) is located above the conveyor (10) and is positioned to overlie the conveyor whereby material (11) on the conveyor contacts the underside of the flap device.

3. The apparatus as claimed in Claim 2 further characterised in that the flap device (13) is pivotably mounted at one of its ends to a supporting structure (14) and in that means (23) are provided for detecting pivotal movement of the flap device (13) and thereby sensing the presence of material on the conveyor.

4. The apparatus as claimed in claim 3 further characterised in that the flap device (13) is formed at least in part from a sheet of resilient flexible material and in that the supporting structure (14) is positioned above the conveyor in a manner such that the flap device follows a curved path in extending downwardly from the supporting structure toward the conveyor.

5. The apparatus as claimed in claim 4 further characterised in that the upper surface of an end portion of the flap device (13) which is remote from the supporting structure (14) is clad with a flat sheet (16) of relatively rigid material whereby that end portion of the flap device is maintained in a substantially flat condition.

6. The apparatus as claimed in claim 5 further characterised in that the flap device (13) is pivotably mounted to the supporting structure by way of a rod (18), the rod being connected at one end to the flat sheet (16) and being also connected to said one end of the flap device by means (22) permitting relative movement between the rod and said one end of the flap device.

7. The apparatus as claimed in any one of the preceding claims further characterised in that the distributor (25) includes a series of distribution channels (27) which open to an edge of the distributor which lies substantially flush with the lower surface of the flap device.

8. The apparatus as claimed in Claim 7 further characterised in that the distributor (25) is removably mounted within a recess in the flap device.

9. A method of applying a fluid to a bulk material (11) which is carried by a conveyor (10), wherein the fluid is directed into the material (11) by way of a distributor (25), a pivotal flap device being located adjacent the conveyor (10) and positioned such that it contacts the material carried by or delivered from the conveyor, and the fluid delivered to the distributor (25) is responsive to the material being sensed to be present on the conveyor, characterised in that the distributor (25) is mounted to the pivotal flap device (13).

## Revendications

1. Appareil pour appliquer un fluide à un matériau qui est porté par un convoyeur (10), l'appareil comprenant un dispositif à volet (13) situé au voisinage du convoyeur et disposé de manière à venir en contact avec le matériau (11) porté ou évacué par le convoyeur; un distributeur (25) agencé de manière à diriger le fluide à l'intérieur du matériau (11), qui vient en contact avec le dispositif à volet (13) lors de l'utilisation de l'appareil, et dans lequel il est prévu des moyens (29) servant à délivrer le fluide au distributeur (25), des moyens (23) pour détecter l'existence d'un matériau sur le convoyeur (10) et admettre le fluide dans le distributeur (25) en réponse à la détection de la présence du matériau sur le convoyeur, caractérisé en ce que le distributeur (25) est monté sur le dispositif à volet (13) et s'étend en sur au moins une partie de l'étendue en largeur du dispositif à volet (13).

2. Appareil selon la revendication 1, caractérisé en outre en ce que le dispositif à volet (13) est situé au-dessus du convoyeur (10) et est disposé de manière à recouvrir le convoyeur, le matériau (11) situé sur le convoyeur venant en contact avec la face inférieure du dispositif à volet.

3. Appareil selon la revendication 2, caractérisé en outre en ce que le dispositif à volet (13) est monté pivotant, au niveau de l'une de ses extrémités, sur une structure de support (14), et en ce qu'il est prévu des moyens (23) pour détecter le mouvement de pivotement du dispositif à volet (13) et détecter de ce fait la présence d'un matériau sur le convoyeur.

4. Appareil selon la revendication 3, caractérisé en outre en ce que le dispositif à volet (13) est constitué au moins en partie par une feuille d'un matériau élastique flexible, et en ce que la structure de support (14) est disposée au-dessus du convoyeur de telle sorte que le dispositif à volet suit un trajet courbe descendant à partir de la structure de support en direction du convoyeur.

5. Appareil selon la revendication 4, caractérisé en outre en ce que la surface supérieure d'une partie d'extrémité du dispositif à volet (13), qui est distante de la structure de support (14), est recouverte par une feuille plane (16) formée d'un matériau relativement rigide, ce qui a pour effet qu'une partie d'extrémité du dispositif à volet est maintenue dans un état sensiblement plat.

6. Appareil selon la revendication 5, caractérisé en outre en ce que le dispositif à volet (13) est monté pivotant sur la structure de support par l'intermédiaire d'une tige (10a), qui est raccordée, par une extrémité, à la feuille plane (16) et est également raccordée, par une première extrémité du dispositif à volet, par des moyens (22) permettant un déplacement relatif entre la tige et ladite première extrémité du dispositif à volet.

7. Appareil selon l'une quelconque des revendications précédentes, caractérisé en outre en ce que le distributeur (25) comprend une série de canaux de distribution (27) qui s'ouvrent au niveau d'un bord du distributeur, qui est sensiblement de niveau avec la surface inférieure du dispositif à volet.

8. Appareil selon la revendication 7, caractérisé en outre en ce que le distributeur (25) est monté de façon amovible dans un renfoncement ménagé dans le dispositif à volet.

9. Procédé pour appliquer un fluide à un matériau en vrac (11) porté par un convoyeur (10), et selon lequel le fluide est dirigé à l'intérieur du matériau (11) par l'intermédiaire d'un distributeur (25), un dispositif à volet pivotant étant dispose au voisinage du convoyeur (10) et positionné de manière à venir en contact avec le matériau porté ou délivré par le convoyeur, et le fluide est envoyé au distributeur (25) en réponse à la détection de la présence du matériau sur le convoyeur, caractérisé en ce que le distributeur (25) est monté sur le dispositif à volet pivotant (13).

**Patentansprüche**

1. Vorrichtung zum Aufbringen eines Fluids auf einem von einem Förderer (10) getragenen Gut, mit einer Lappenanordnung (13), die neben dem Förderer liegt und so positioniert ist, um das vom Förderer getragene oder abgegebene Gut (11) zu berühren, einem Verteiler (25) zur Zuführung von Fluid in das Gut (11), das beim Betrieb der Vorrichtung von der Lappenanordnung (13) berührt wird, mit einer Einrichtung (29) zur Abgabe des Fluids an den Verteiler (25), einer Einrichtung (23) zum Erfassen eines Vorliegens von Gut auf dem Förderer (10) und zur Abgabe von Fluid an den Verteiler (25), abhängig davon, ob ein Vorliegen von Gut auf dem Förderer erfasst wird, dadurch **gekennzeichnet,** dass der Verteiler (25) auf der Lappenanordnung (13) befestigt ist und sich über mindestens einen Abschnitt der Lappenanordnung (13) erstreckt.

2. Vorrichtung nach Anspruch 1, dadurch **gekennzeichnet,** dass die Lappenanordnung (13) über dem Förderer (10) angeordnet und so positioniert ist, dass sie den Förderer überlagert ist, so dass auf ihm befindliches Gut die Unterseite der Lappenanordnung berührt.

3. Vorrichtung nach Anspruch 2, dadurch **gekennzeichnet,** dass die Lappenanordnung (13) an einem ihrer Enden an einer Tragvorrichtung (14) schwenkbar befestigt ist und dass eine Einrichtung (23) vorgesehen ist, um eine Schwenkbewegung der Lappenanordnung (13) festzustellen und dadurch das Vorliegen von Gut auf dem Förderer zu erfassen.

4. Vorrichtung nach Anspruch 3, dadurch **ge-**

**kennzeichnet,** dass die Lappenanordnung (13) zumindest zum Teil aus einer Fläche aus einem elastischen, biegsamen Werkstoff besteht, und dass die Tragvorrichtung (14) über dem Förderer derart positioniert ist, dass die Lappenanordnung sich längs einer Kurve von der Tragvorrichtung nach unten gegen den Förderer erstreckt.

5. Vorrichtung nach Anspruch 4, dadurch **gekennzeichnet,** dass die Oberseite eines Endabschnittes der Lappenanordnung (13), der von der Traganordnung (14) fern liegt, mit einer flachen Fläche (16) aus verhältnismässig steifem Werkstoff überzogen ist, so dass der Endabschnitt der Lappenanordnung im wesentlichen im flachen Zustand gehalten wird.

6. Vorrichtung nach Anspruch 5, dadurch **gekennzeichnet,** dass die Lappenanordnung (13) an der Tragvorrichtung mittels eines Stabes (18) schwenkbar befestigt ist, der Stab an einem Ende an der flachen Fläche (16) befestigt ist, und ferner mit dem einen Ende der Lappenanordnung mit Hilfe einer Vorrichtung (22) verbunden ist, die eine Relativbewegung zwischen dem Stab und dem einen Ende der Lappenanordnung ermöglicht.

7. Vorrichtung nach irgendeinem der vorausgehenden Ansprüche, dadurch **gekennzeichnet,** dass der Verteiler (25) eine Reihe von Verteilerkanälen (27) aufweist, die an einer Kante des Verteilers münden, die im wesentlichen bündig mit der Unterseite der Lappenanordnung verläuft.

8. Vorrichtung nach Anspruch 7, dadurch **gekennzeichnet,** dass der Verteiler (25) abnehmbar innerhalb einer Ausnehmung in der Lappenanordnung befestigt ist.

9. Verfahren zum Auftragen eines Fluids auf Schüttgut (11), das von einem Förderer (10) getragen wird, wobei das Fluid mittels eines Verteilers (25) in das Gut (11) geleitet wird, eine schwenkbare Lappenanordnung neben dem Förderer (10) liegt und derart positioniert ist, dass sie das vom Förderer getragene oder abgegebene Gut berührt, und Fluid dem Verteiler (25) abhängig davon zugeführt wird, dass das Vorliegen des Gutes am Förderer erfasst wird, dadurch **gekennzeichnet,** dass der Verteiler (25) an der schwenkbaren Lappenanordnung (13) befestigt ist.

FIG. 1

FIG. 2

FIG. 3

FIG. 4

FIG. 5

EP 0 261 908 B1

FIG. 6